# EUROPEAN PATENT APPLICATION

(11) **EP 4 763 891 A1**
(43) Date of publication of application: **24.06.2026**
(21) Application number: 24221613.3
(22) Date of filing: 19.12.2024
(51) Int. Cl.: C08J 3/22, C08J 5/04, C08K 7/02

(54) **POLYOLEFIN AND PLANT FIBERS COMPOSITION**

(71) Applicant: Sustan B.V., 6222 PG Maastricht (NL)
(72) Inventor: Dresen, Roy Johannes Marie Nicolaas, 6222 PG Maastricht (NL); Vrösch, Martin Jean José, 6222 PG Maastricht (NL)
(74) Representative: EP&C

(57) **Abstract**

The invention relates to a masterbatch comprising:
a) 5-50 wt% of a polyolefin,
b) 40-85 wt% of plant fibers,
c) 1.5-25 wt% of calcium stearate,
d) 0-25 wt% of a compatibilizer and/or plasticizer,

wherein the plant fibers have a length size less than 500 µm,
wherein the total of a)+b)+c) is at least 85 wt% of the masterbatch, and
wherein the wt% is relative to the weight of the masterbatch.

## Description

### Field of the invention

The invention relates to a polyolefin and plant fibers composition, and its use for the preparation of products.

### State of the art

WO2008/118134 describes flame resistant natural fiber filled thermoplastics with improved properties. The composition comprises wood-filled polyolefins having added flame retardants such as aluminum trihydrate, magnesium hydroxide and bromo containing flame retardants. Flame retardancy is induced by the presence of the toxic Bromo compounds, which need to be avoided in many applications.

There is a need for thermoplastic compounds that are absent in toxic materials, preferably recycled, while having excellent properties for many applications.

The invention relates to a masterbatch and a composition comprising the masterbatch solving at least part of the problems of the prior art.

### Summary of the invention

In a first aspect, the present invention is directed to a masterbatch comprising:
a) 5-50 wt% of a polyolefin,
b) 40-85 wt% of plant fibers,
c) 1.5-25 wt% of calcium stearate
d) 0-15 wt% of a compatibilizer and/or plasticizer,

wherein the plant fibers have a length size less than 500 µm,
wherein the total of a)+b)+c) is at least 85 wt% of the masterbatch, and
wherein the wt% is relative to the weight of the masterbatch.

In a further aspect, the present invention is directed to a composition comprising:
a) a recycled polyolefin,
b) the masterbatch,

wherein the concentration of total polyolefin in the composition ranges between 55-95 wt%; and
wherein the concentration of the plant fibers ranges between 5-40 wt% relative to the weight of the composition.

In a further aspect, the present invention is directed to a product made from the composition as defined above, such as plant containers.

The inventors surprisingly found that the composition of the invention is economically viable, environmental friendly and is characterized by good properties such as good fire-resistance, while having at the same time a high elasticity and tensile strenght.

### Detailed description of the invention

The present invention is directed to a masterbatch comprising:
a) 5-50 wt% of a polyolefin,
b) 40-85 wt% of plant fibers,
c) 1.5-25 wt% of calcium stearate,
d) 0-25 wt% of a compatibilizer and/or plasticizer,
wherein the plant fibers have a length size less than 500 µm, wherein the total of a)+b)+c) is at least 85 wt% of the masterbatch, and wherein the wt% is relative to the weight of the masterbatch.

The masterbatch of the current invention may further contain additives such as processing aids, colorants, antistatic agents, light stabilizers and fillers. Typically additives can be present from 0-10 wt% relative to the masterbatch.

Preferably the total of a)+b)+c) is at least 88 wt% of the masterbatch, more preferably at least 92 wt% of the masterbatch, or at least 95 wt% of the masterbatch. This masterbatch provides a low cost composition, which can be used to be blended with polyolefins, such as recycled polyolefins, which shows unexpected high E-modulus and high elongation at break and superior flame retardancy.
In a preferred embodiment the masterbatch consists of 10-25 wt% of a polyolefin, 60-75 wt% of Miscanthus plant fibers, 1.9-12 wt% of a calcium stearate, 0-11 wt% of a compatibilizer or plasticizer and 0-2 wt% of an additive.

The masterbatch of the current invention comprises a polyolefin. The polyolefin may be used in a range of 5-50 wt% based on the total weight of the masterbatch, preferably in a range of 6-25 wt%, more preferably in a range of 7-22 wt%.

The use of the polyolefin below 5 wt% may result in an unstable process for preparing the masterbatch.

The term "polyolefin" according to the present invention refers to a type of polymer with the general formula (CH₂CHR)n where R is hydrogen or an alkyl group.

Preferred example of polyolefins are polyethylene (PE) (like for example low-density polyethylene (LDPE), linear low-density polyethylene (ILDPE) and medium-density polyethylene (MDPE)), and polypropylene (PP).

The polyolefin of the masterbatch may be preferably selected from the group consisting of polyethylene and polypropylene, more preferably the polyolefin is polyethylene.

The polyolefin used in the masterbatch may be virgin or recycled.

The polyolefin for use in the masterbatch is preferably a polyethylene having a Melt Index (Ml) (2,16 kg, 190 °C) between 2 and 20 g/10 min, or a polypropylene having a Melt Index (Ml) (2,16 kg, 230 °C) between 20 and 40 g/10 min, according to ISO 1133-1. Most preferably the polyolefin for use in the masterbatch is a polyethylene having a Melt Index (Ml) (2,16 kg, 190 °C) between 2 and 20 g/10 min.

The masterbatch comprises plant fibers. The plant fibers may be used in a range of 40-85 wt% based on the total weight of the composition, preferably in a range of 50-80 wt%, more preferably in a range of 60-75 wt%.

The term "plant fibers" refers to fibers obtained from plants. The masterbatch preferably comprises plant fibers selected from the plant genus of Miscanthus.

Examples of Miscanthus fibers include Miscanthus Depauperatus, Miscanthus Ecklonii, Miscanthus Floridulus, Miscanthus Fuscus, Miscanthus Longiberbis, Miscanthus Lutarioriparius, Miscanthus Nepalensis, Miscanthus Nudipes, Miscanthus Oligostachyus, Miscanthus Paniculatus, Miscanthus Sacchariflorus, Miscanthus Sinensis, Miscanthus Tinctorius, Miscanthus Villosus, Miscanthus Wangpicheonensis and Miscanthus Giganteus.

Preferably, the masterbatch comprises Miscanthus Giganteus fibers.

The plant fibers used in the masterbatch have a length size less than 500 µm, preferably less than 400 µm, more preferably less than 300 µm.

The inventor found that when the length size is above 500 µm processing problems for the end application appeared or the resulting masterbatch did not have the right balance of properties. For example, when an injection moulding process is used involving a hot runner system, the fibers having length size above 500 µm may block the hot runner, thereby stopping the injection moulding process. Or alternatively, when an extrusion process is used, the fibers having length size above 500 µm may partly block the die head, leading to a bad quality of the profile that is produced.

Moreover the inventor found that the use of the masterbatch in modifying a polyolefin, like for example a recycled polyolefin, does not show the improved elongation at break or elasticity when long fibers are present.

Surprisingly, the inventor of the current invention found that the length size of the plant fibers less than 500 µm improves the elasticity of the final plastic product, in combination with a high E-modulus and superior flame retardancy.

The plant fibers with the desired length are collected after grinding, by separating the grinded plant fibers using a sieve having a mesh of 500 µm, preferably of 400 µm, more preferably of 300 µm.

The masterbatch comprises calcium stearate. The calcium stearate is used in a range of 1.5 wt% to 25 wt% based on the total weight of the composition, preferably in a range of 1.8 wt% to 20 wt%, more preferably between 1.9 wt% and 12 wt%. Calcium stearate is believed to give an improved lubrification of plant fibers resulting in good mixing of plant fibers and polyolefins.

The masterbatch of the current invention can comprise a compatibilizer and/or plastizicer. The compatibilizer and/or plasticizer can be used in a range of from 0-25 wt%, preferably in a range from 0.1 to 12 wt% based on the total weight of the master batch, preferably in a range of 0.2 wt% to 10 wt%. The masterbatch can be absent in compatibilizer and/or plasticizer when the amount of Ca stearate is at least 4.5 wt%, preferably when the amount of Ca stearate is between 4.5 and 11 wt%. At low amounts of Ca-stearate, the presence of compatibilizer and/or plasticizer can help the flow of material during preparation of the masterbatch.

The term "compatibilizer" according to the present invention refers to a compound that acts as wetting and processing agent facilitating the homogeneous blending of different polyolefins. Compatibilizers are generally known in the field.

A plasticizer is a component that can lower the viscosity of a compound. Examples of plasticizers are polyethylene wax and polypropylene wax.

In a preferred embodiment, the masterbatch as indicated above, comprises:
a) 10-25 wt% polyethylene, having a MI (2,16 kg, 190 °C) between 2 and 20 g/10 min, or 10-25 wt% polypropylene, having a MI (2,16 kg, 230 °C) between 20 and 40 g/10 min, according to ISO 1133-1;
b) 60-75 wt% Miscanthus Giganteus,
c) 1.9-12 wt% calcium stearate
wherein the total of a)+b)+c) is at least 85 wt% of the masterbatch, wherein the wt% is relative to the weight of the composition.

Preferably the total of a)+b)+c) is at least 88 wt% of the masterbatch, more preferably at least 92 wt% of the masterbatch, or at least 95 wt% of the masterbatch.

Preferably in step a) 10-25 wt% polyethylene is used for the preparation of both a polyethylene or polypropylene-based composition.

In an embodiment of the invention, the polyethylene (a) of the masterbatch is a recycled polyethylene.

Due to the outdoor use of polyolefin-based products, the product should be not only resistant to light and weather conditions but preferably also flame-resistant based on regulations applied to materials. Especially to materials in exterior applications in the urban wild land interface.

Surprisingly, the inventor found that the final plastic product made by using the masterbatch of the invention is flame resistance without the need of further ingredients as the commercially available flame retardant additives such as Aluminum Trihydrate (ATH), magnesium hydroxide and halogen-based compounds.

Preferably, the masterbatch contains less than 1 % of flame retardant such as Aluminum Trihydrate (ATH), magnesium hydroxide and halogen-based compounds. More preferably, the masterbatch contains less than 0.5% of flame retardant, most preferably no flame retardant is present.

Hence, the components of the masterbatch and the length of the plant fibers, positively impart the desired physical properties of the final plastic product, providing good fire-resistance and desired elasticity.

The masterbatch may be prepared with processes known to the skilled person. Preferably, the masterbatch may be prepared by pre-mixing the different ingredients in an extruder. The pre-mix may be dosed at the hopper of the extruder. The amount of plant fibers can be split in different parts and may be dosed to the extruder by side feeding.

Preferably the extruder is a co-rotating extruder. Preferably the co-rotating extruder preferably comprises at least one degassing zone to remove the moisture from the product. The screws of the extruder may have a maximum of three kneading zones to avoid high shear.

The masterbatch as described above may be used in preparing a composition for plastic products.

In a further aspect, the present invention is directed to a composition comprising:
a) a recycled polyolefin,
b) the masterbatch as defined above,

wherein the concentration of total polyolefin in the composition ranges between 55-95 wt%; and
wherein the concentration of the plant fibers ranges between 5-40 wt% relative to the weight of the composition.

The total polyolefin in the composition is defined as the polyolefin present in the masterbatch (b) and the recycled polyolefin (a).

The inventor found that the masterbatch of the invention can be easily mixed with a recycled polyolefin providing an environmentally friendly product with high levels of plant fiber and very little amount or none virgin plastic materials but having properties similar to products using only virgin plastic materials.

Preferably, the concentration of the total polyolefin in the composition ranges between 55-95 wt%; preferably between 70-95 wt%, more preferably between 80-90 wt%.

When the concentration of the total polyolefin in the composition is less than 55 wt%, negative effects on the properties of the composition have been observed; for example the composition may have bad flow properties leading to production problems. Moreover the brittleness of the composition is too high and a rough surface will be obtained.

The concentration of the plant fibers in the composition ranges between 5-40 wt% relative to the weight of the composition. Preferably the concentration of the plant fibers in the composition ranges between 5-30 wt%, more preferably between 10-20 wt%.

The recycled polyolefin is preferably selected from the group consisting of recycled polypropylene and recycled polyethylene.

Hence, the plastic products prepared with the masterbatch of the current invention may be made using the following combinations:
a virgin polypropylene or recycled polypropylene based -masterbatch combined with recycled polypropylene or
a virgin polyethylene or recycled polyethylene based -masterbatch combined with recycled polyethylene or
a virgin polyethylene or recycled polyethylene based -masterbatch combined with recycled polypropylene.

The composition of the current invention preferably comprises between 2 and 25 wt% of polyethylene, having a MI (2,16 kg, 190 °C) between 2 and 20 g/10 min, or 5-25 wt% polypropylene, having a MI (2,16 kg, 230 °C) between 20 and 40 g/10 min, according to ISO 1133-1, and between 0.2 and 5 wt% of calcium stearate.

Preferably, the composition as indicated above comprises more than 80 wt% of recycled polypropylene, more preferably more than 90 wt%; wherein the wt% is relative to the weight of the polyolefin. The remaining of the composition is preferably the masterbatch as defined above.

The composition of the present invention may be prepared with processes known to the skilled person. Preferably, it is prepared by mixing the masterbatch of the present invention with the recycled polyolefin in an extruder.

In a further aspect, the present invention is directed to a product made from the composition as defined above.

Example of products are plant containers, panels, packaging products, pallets, painting trays, cable duct, road plates and pipes.

The products prepared with the composition of the current invention may be selected from the group consisting of a plant container, panels, packaging products, pallets, painting trays, cable duct, road plates and pipes. Preferably, the products prepared with the composition of the current invention may be selected from the group consisting of a plant container, pallets and road plates.

More preferably the product is a plant container.

### Figure

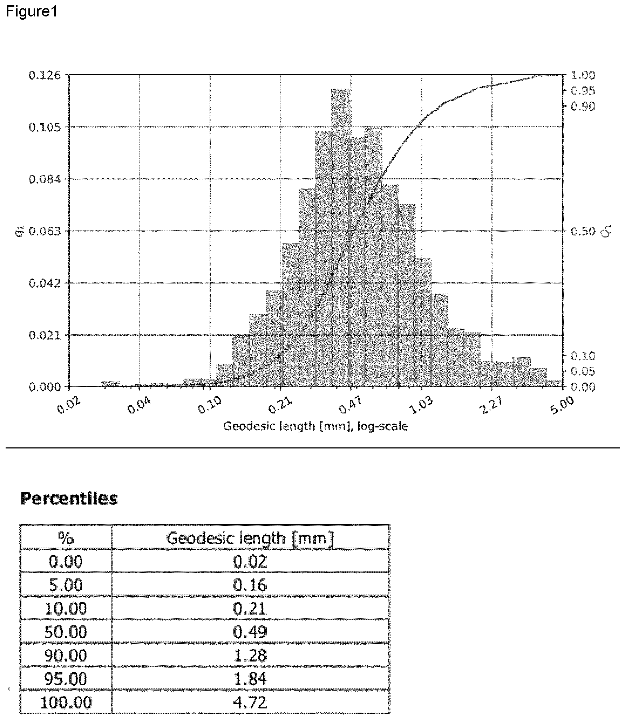

Figure 1: particles size distribution of Miscanthus fibers, measured according to ISO9276-1 and ISO9276-2.

### Experiments

Several experiments have been performed with materials listed below:

| | | |
|---|---|---|
| Miscanthus pellets | Size 0-10 mm | Vestjens |
| Miscanthus fibers | Size <500 µm | Vestjens |
| PE-wax AC617 | AC617 | Honeywell |
| LDPE | LDPE2102NOW | Sabic |
| Polypropylene-virgin | PP412MN40 | Sabic |
| Polypropylene-recycled | | Stiphout Plastics |
| SCONA TSPP10213GB | Compatibilizer | BYK |
| SCONA TPPP 9212 FA | Compatibilizer | BYK |
| SCONA TPPP 8112 GA | Compatibilizer | BYK |
| SCONA TPPP 8112 FA | Compatibilizer | BYK |
| SCONA TSPP 5013 GB | Compatibilizer | BYK |
| Ca Stearate | Ligastar CA 800 | Peter Greven |
| Zn Stearate | Z6423 | Sigma-Aldrich |

LDPE2102NOW has a MI (2.16 kg at 190°C) of 2.5 dg/min.

PP412MN40 has a MI of (2.16 kg at 230°C) of 37 g/10min.

Miscanthus fibers <500µm have a particle size distribution as shown in FIG 1.

### Experiment 1.1: Preparation of a masterbatch by pre-mixing the ingredients.

In this procedure the polyolefin, the plant fibers and the compatibilizer are premixed by tumbling into a blend. The blend is dosed at the hopper with continuous mixing to a twin screw extruder like a 12 mm Twin screw LTE12-36, of saga Instruments Pte Ltd. The twin screw extruder needs to be filled as much as possible and the volumetric dosing needs to be set to achieve the optimum filling rate.

A blend of a polyethylene is mixed with Miscanthus fibers and extruded at a temperature between 160-185 °C, with a speed of 100 rpm.

### Experiment 1.2: Preparation of a masterbatch by side-feeding of a part of the fibers

In this procedure the polyolefin, 50 vol% of the plant fibers and the compatibilizer are dosed at the hopper of a twin screw extruder. The other 50 vol% of plant fibers are dosed by side-feeding.

### Experiment 1.3: Granulation of the compound by strand granulation

In this procedure the granulation of the masterbatch at the end of an extruder is done by strand granulation cooled by water. The granules are collected and packed.

### Experiment 1.4: Granulation of the masterbatch by die head granulation

In this procedure the granulation of the masterbatch at the end of an extruder is done by die head granulation and cooled by air. The granules are collected and packed.

### Experiment 1.5: Preparation of compositions.

Test bone are produced by injection moulding for all of the materials mentioned in tables 1-5, whereby a recycle polypropylene is used as a base polymer to reduce the amount of Miscanthus from the masterbatch to an amount of 20%. This recycle polypropylene is also injection moulded without any Miscanthus as a reference (exp 2.1).

The masterbatch is mixed to the recycle polypropylene dosed to the injection moulding equipment. The masterbatch mixes with the molten polymer in the barrel.

Injection: The molten mixture is injected into the mould cavity where it cools and solidifies into the final product. The test bone is tested using a tensile testing machine on the properties resulting in the values mentioned below in table 1.

**Table 1.**

| Ingredient masterbatch | Exp | 1.1 | 1.2 | 1.3 | 1.4 | 1.5 |
|---|---|---|---|---|---|---|
| LDPE 2102NOW | [%] | | 20 | 20 | 20 | 20 |
| Miscanthus (pellets niet gezeefd) | [%] | | 70 | | | |
| Miscanthus (<500 µm) | [%] | | | 70 | | |
| Miscanthus (0,5-1mm) | [%] | | | | 70 | |
| Miscanthus (1-4mm) | [%] | | | | | 70 |
| Calciumstearaat Ligastar CA 800 | [%] | | 10 | 10 | 10 | 10 |
| Totaal | [%] | | 100 | 100 | 100 | 100 |
| | | | | | | |
| E-mod | [MPa] | 972 | 1389 | 1321 | 1527 | 1554 |
| σ(max) | [MPa] | 23,7 | 17,3 | 17,9 | 17,8 | 17,9 |
| ε@σbrk | [%] | 81,9 | 6,4 | 11,3 | 6,4 | 6,4 |

When the plant fibers are Miscanthus Giganteus having a length size less than 500 µm, the elasticity ε@σbrk has a value of at least 10. Such elasticity makes the final product to not easily break or deform.

When the plant fibers are Miscanthus Giganteus having a length size between 500 µm and 1000 µm or between 1000 to 4000 µm the elasticity has a value below 7.5 which means that the product can easily break.

The data reported in Table 1 clearly shows that the ε@σbrk (elasticity) changes based on the length size of the plant fibers.

### Experiment 2: testing of different compatibilizers and plasticizers

**Table 2**

| ingredient masterbatch | exp | 2.1 | 2.2 | 2.3 | 2.4 | 2.5 | 2.6 | 2.7 | 2.8 | 2.9 | 2.10 |
|---|---|---|---|---|---|---|---|---|---|---|---|
| Miscanthus (<500 µm) | [%] | 0 | 70 | 70 | 70 | 70 | 70 | 70 | 70 | 70 | 70 |
| PE-Wax (AC-617) | [%] | 0 | 15 | 10 | 10 | 6,5 | 8,6 | 7,9 | 7,9 | 7,9 | 0 |
| LDPE 2102NOW | [%] | 0 | 15 | 18 | 18 | 18 | 18 | 18 | 18 | 18 | 0 |
| SCONATSPP 10213 GB | [%] | | | | | 3,5 | | | | | |
| SCONA TPPP 9212 FA | [%] | | | | | | 1,4 | | | | |
| SCONA TPPP 8112 GA | [%] | | | | | | | 2,1 | | 2,1 | |
| SCONATPPP 8112 FA | [%] | | | | | | | | 2,1 | | |
| SCONA TSPP 5013 GB | [%] | | | | | | | | | | 28 |
| Calciumstearaat | [%] | | | 2 | | 2 | 2 | 2 | 2 | 2 | 2 |
| Zinc stearate 26423 | [%] | | | | 2 | | | | | | |
| Totaal | [%] | | 100 | 100 | 100 | 100 | 100 | 100 | 100 | 100 | 100 |
| | | | | | | | | | | | |
| E-mod | [MPa] | 1245 | ND | 1744 | ND | 1779 | 1734 | 1889 | 1912 | 1809 | 2019 |
| σ(max) | [MPa] | 27,1 | | 21,7 | | 23,3 | 22,4 | 22,7 | 22,5 | 23,7 | 26,4 |
| ε@σbrk | [%] | 10,7 | | 8,4 | | 6,9 | 7,2 | 6,3 | 7 | 9,7 | 6,7 |
| Charpy | [kJ/m2] | 6,37 | | | | | | 3,54 | | 4,3 | 3,77 |
| | | | | | | | | | | | |
| ND: no extrusion possible | | | | | | | | | | | |

PP is recycled PP of Stiphout Plastics having properties as shown in exp 2.1.

In all examples a composition is prepared having 80 wt% of recycled PP (see exp 2.1) blended with 20 wt% of masterbatch. The table contains the composition of the 20 wt% of the masterbatch.

Absence of Ca stearate shows that no product can be obtained. Zn-stearate is not an alternative for Ca-stearate.

The experiments show a level of compatibilizers and plasticizer of around 10 wt%, which gives products having good elongation at break, but intermediate E-modulus.

### Experiment 3: testing of Miscanthus fibers with LDPE

**Table 3**

| ingredient masterbatch | exp | 2.1 | 3.1 | 3.2 | 3.3 | 3.4 | 3.5 | 3.6 | 3.7 |
|---|---|---|---|---|---|---|---|---|---|
| Miscanthus (<500 µm) | [%] | | 70 | 75 | 70 | 70 | 75 | 70 | 70 |
| LDPE 2102NOW | [%] | | 25 | 20 | 25 | 22 | 17 | 13 | 10 |
| SCONATPPP 8112 GA | [%] | | | | 3 | 3 | 3 | | |
| SCONATSPP 5013 GB | [%] | | | | | | | 15 | 15 |
| Calciumstearaat | [%] | | 5 | 5 | 2 | 5 | 5 | 2 | 5 |
| Totaal | [%] | | 100 | 100 | 100 | 100 | 100 | 100 | 100 |
| | | | | | | | | | |
| E-mod | [MPa] | 1245 | 1842 | 1830 | 1813 | 1815 | 1860 | 1789 | 1921 |
| σ(max) | [MPa] | 27,1 | 22,0 | 22,0 | 23,0 | 22,9 | 22,5 | 23,8 | 22,6 |
| ε@σbrk | [%] | 10,7 | 7,9 | 6,2 | 7,3 | 8,2 | 7,5 | 7,8 | 7,0 |
| Charpy | [kJ/m2] | 6,37 | | | | | | | |

This example shows good elongation at break values at a level of Ca stearate between 2-5 wt%. The E-modulus is improved relative to the base rPP, while the elongation at break (ε@σbrk) is at a good level.

### Experiment 4: testing of different sizes of Miscanthus and LDPE or PP in the masterbatch

**Table 4**

| ingredient masterbatch | exp | 2.1 | 4.1 | 4.2 | 4.3 | 4.4 | 4.5 | 4.6 | 4.7 | 4.8 | 4.9 |
|---|---|---|---|---|---|---|---|---|---|---|---|
| Miscanthus (<500 µm) | [%] | | 70 | | | 70 | 70 | | | | |
| Miscanthus pellets | [%] | | | 70 | 70 | | | 70 | 70 | 70 | 70 |
| LDPE 2102NOW | [%] | | 20 | 25 | 20 | | | | | | |
| PP412MN40 | [%] | | | | | 25 | 20 | 25 | 20 | 22 | 20 |
| Krijt Superical 10 | [%] | | | | 5 | | | | 5 | | |
| SCONATPPP 8112 GA | [%] | | | | | | | | | 3 | |
| Calciumstearaat | [%] | | 10 | 5 | 5 | 5 | 10 | 5 | 5 | 5 | 10 |
| Totaal | [%] | | 100 | 100 | 100 | 100 | 100 | 100 | 100 | 100 | 100 |
| | | | | | | | | | | | |
| E-mod | [MPa] | 1245 | 2239 | 1996 | 2142 | 2342 | 2414 | 2260 | 2129 | 2244 | 2331 |
| o(max) | [MPa] | 27,1 | 22,6 | 23,1 | 21,8 | 23,9 | 23,3 | 24,5 | 24,1 | 24,5 | 24,2 |
| s@σbrk | [%] | 10,7 | 6,6 | 5,8 | 5,1 | 7,1 | 5,9 | 5,0 | 4,6 | 4,6 | 5,5 |
| Charpy | [kJ/m2] | 6,37 | | | | | | | | | |

This examples shows good elongation at break values at a level of Ca stearate of 10 wt%, and very high E-modulus of 2239 MPa, when Miscanthus fibers of less than 500 µm are being used. Use of long Miscanthus fibers results in poor products, especially relative to the elongation at break (ε@σbrk), which drops below 6%.

### Experiment 5: testing of higher levels of Ca-stearate.

**Table 5**

| ingredient masterbatch | exp | 2.1 | 5.1 | 5.2 | 5.3 | 5.4 | 5.5 |
|---|---|---|---|---|---|---|---|
| Miscanthus pellets | [%] | | 70 | 70 | 70 | 70 | 70 |
| LDPE 2102NOW | [%] | | 20 | 15 | 10 | | |
| PP 412MN40 | [%] | | | | | 15 | 10 |
| Calciumstearaat | [%] | | 10 | 15 | 20 | 15 | 20 |
| Totaal | [%] | | 100 | 100 | 100 | 100 | 100 |
| | | | | | | | |
| E-mod | [MPa] | 1246 | 1895 | 1961 | 2122 | 2112 | 2223 |
| σ(max) | [MPa] | 27,1 | 21,9 | 21,9 | 21,0 | 23,2 | 22,1 |
| ε@σbrk | [%] | 10,7 | 4,9 | 4,8 | 4,0 | 5,3 | 4,1 |
| Charpy | [kJ/m2] | 6,4 | | | | | |

Use of Miscanthus pellets having rough Miscanthus fibers in the masterbatch results in poor elongation at break and rather brittle products. The modulus is clearly improved, but the balance of properties is insufficient.

### Experiment 6: Flammability test UL 94 HB

The Flammability test UL 94 HB has been used to evaluate the flammability of the final plastic products of the invention. The data are reported in Table 6.

**Table 6.**

| **Material** | | **Burning rate** mm/min |
|---|---|---|
| PPrec Stiphout Plastics | Reference (No fibers) | 25 |
| PPrec Stiphout Plastics | Unsieved fibers (0-4mm) | 14 |
| PPrec Stiphout Plastics | <500µm fibers | 3 |

According to norm UL94-HB, the burning rate of a polymer composition comprising Miscanthus Giganteus is lower than the burning rate of the reference. Particularly when the Miscanthus Giganteus has a length size less than 500 µm

The data of Table 6, clearly shows that the final plastic product has improved flame retardant properties.

## Claims

1. A masterbatch comprising:
a) 5-50 wt% of a polyolefin,
b) 40-85 wt% of plant fibers,
c) 1.5-25 wt% of calcium stearate,
d) 0-25 wt% of a compatibilizer and/or plasticizer,
wherein the plant fibers have a length size less than 500 µm,
wherein the total of a)+b)+c) is at least 85 wt% of the masterbatch, and
wherein the wt% is relative to the weight of the masterbatch.

2. The masterbatch according to claim 1, wherein the masterbatch consists of
a) 10-25 wt% of a polyolefin,
b) 60-75 wt% of Miscanthus plant fibers,
c) 1.9-12 wt% of a calcium stearate,
d) 0-11 wt% of a compatibilizer or plasticizer and
e) 0-2 wt% of an additive.

3. The masterbatch according to any of the preceding claims, wherein the total of a)+b)+c) is at least 88 wt% of the masterbatch, more preferably at least 92 wt% of the masterbatch, or at least 95 wt% of the masterbatch.

4. The masterbatch according to any of the preceding claims, wherein the polyolefin is present in a range of 6-25 wt%, more preferably in a range of 7-22 wt%.

5. The masterbatch according to any of the preceding claims, wherein the polyolefin is a polyethylene having a Melt Index (Ml) (2,16 kg, 190 °C) between 2 and 20 g/10 min, or a polypropylene having a Melt Index (MI) (2,16 kg, 230 °C) between 20 and 40 g/10 min, according to ISO 1133-1, preferably wherein the polyolefin is a polyethylene having a Melt Index (Ml) (2,16 kg, 190 °C) between 2 and 20 g/10 min.

6. The masterbatch according to any of the preceding claims, wherein the plant fibers are present in a range of 40-85 wt%, preferably in a range of 50-80 wt%, more preferably in a range of 60-75 wt%.

7. The masterbatch according to any of the preceding claims, wherein the plant fibers are Miscanthus fibers.

8. The masterbatch according to any of the preceding claims, wherein calcium stearate is used in a range of 1.8% to 20%, more preferably between 1.9 and 12 wt%.

9. The masterbatch according to any of the preceding claims, wherein the compatibilizer and/or plasticizer are present in a range from 0.1 to 12 wt%, preferably in a range of 0.2 wt% to 10 wt.

10. A polymer composition comprising:
a) a recycled polyolefin,
b) the masterbatch as defined in any one of claims 1-9,
wherein the concentration of the total polyolefin in the composition ranges between 55-95 wt%; and
wherein the concentration of the plant fibers ranges between 5-40 wt% relative to the weight of the composition.

11. The polymer composition according to claim 10, wherein the plant fibers are Miscanthus fibers , which fibers are present between 5-30 wt%, more preferably between 10-20 wt%.

12. The polymer composition according to claim 10 or 11, wherein the composition comprises between 2 and 25 wt% of polyethylene, having a MI (2,16 kg, 190 °C) between 2 and 20 g/10 min, or 5-25 wt% polypropylene, having a MI (2,16 kg, 230 °C) between 20 and 40 g/10 min, according to ISO 1133-1, and between 0.2 and 5 wt% of calcium stearate.

13. The polymer composition according to any one of claims 10-12, wherein the wt% of recycled polypropylene is at least 80 wt%, preferably at least 90 wt%.

## Amended claims

### Amended claims in accordance with Rule 137(2) EPC.

1. A masterbatch comprising:
a) 5-50 wt% of a polyolefin,
b) 40-85 wt% of Miscanthus plant fibers,
c) 1.5-25 wt% of calcium stearate,
d) 0-25 wt% of a compatibilizer and/or plasticizer,
wherein the plant fibers have a length size less than 500 µm (passing through a sieve having a mesh of 500 µm),
wherein the total of a)+b)+c) is at least 85 wt% of the masterbatch, and
wherein the wt% is relative to the weight of the masterbatch.

2. The masterbatch according to claim 1, wherein the plant fibers are present in a range of 50-80 wt%, preferably in a range of 60-75 wt%.

3. The masterbatch according to any of the preceding claims, wherein calcium stearate is used in a range of 1.8% to 20%, more preferably between 1.9 and 12 wt%.

4. The masterbatch according to any of the preceding claims, wherein the compatibilizer and/or plasticizer are present in a range from 0.1 to 12 wt%, preferably in a range of 0.2 wt% to 10 wt.

5. The masterbatch according to any of the preceding claims, wherein the masterbatch consists of
a) 10-25 wt% of a polyolefin,
b) 60-75 wt% of Miscanthus plant fibers,
c) 1.9-12 wt% of a calcium stearate,
d) 0-11 wt% of a compatibilizer or plasticizer and
e) 0-2 wt% of an additive.

6. The masterbatch according to any of the preceding claims, wherein the total of a)+b)+c) is at least 88 wt% of the masterbatch, more preferably at least 92 wt% of the masterbatch, or at least 95 wt% of the masterbatch.

7. The masterbatch according to any of the preceding claims, wherein the polyolefin is present in a range of 6-25 wt%, more preferably in a range of 7-22 wt%.

8. The masterbatch according to any of the preceding claims, wherein the polyolefin is a polyethylene having a Melt Index (MI) (2,16 kg, 190 °C) between 2 and 20 g/10 min, or a polypropylene having a Melt Index (MI) (2,16 kg, 230 °C) between 20 and 40 g/10 min, according to ISO 1133-1, preferably wherein the polyolefin is a polyethylene having a Melt Index (MI) (2,16 kg, 190 °C) between 2 and 20 g/10 min.

9. The masterbatch according to any of the preceding claims, wherein the plant fibers are Miscanthus fibers of the species Miscanthus Giganteus.

10. A polymer composition comprising:
a) a recycled polyolefin,
b) the masterbatch as defined in any one of claims 1-9,
wherein the concentration of the total polyolefin in the composition ranges between 55-95 wt%; and
wherein the concentration of the Miscanthus plant fibers ranges between 5-40 wt% relative to the weight of the composition.

11. The polymer composition according to claim 10, wherein the plant fibers are present between 5-30 wt%, more preferably between 10-20 wt%.

12. The polymer composition according to claim 10 or 11, wherein the composition comprises between 2 and 25 wt% of polyethylene, having a MI (2,16 kg, 190 °C) between 2 and 20 g/10 min, or 5-25 wt% polypropylene, having a **MI** (2,16 kg, 230 °C) between 20 and 40 g/10 min, according to ISO 1133-1, and between 0.2 and 5 wt% of calcium stearate.

13. The polymer composition according to any one of claims 10-12, wherein the wt% of recycled polypropylene is at least 80 wt%, preferably at least 90 wt%.
